# EUROPÄISCHE PATENTANMELDUNG

(11) **EP 1 837 114 A1**
(43) Veröffentlichungstag der Anmeldung: **26.09.2007**
(21) Anmeldenummer: 06006137.1
(22) Anmeldetag: 24.03.2006
(51) Int. Cl.: B23H 1/08, B23H 1/00, B23H 9/10

(54) **Dielektrische Flüssigkeit für die funkenerosive Bearbeitung eines elektrisch nichtleitenden Materials**

(71) Anmelder: SIEMENS AKTIENGESELLSCHAFT, 80333 München (DE); Albert-Ludwigs-Universität Freiburg, 79085 Freiburg (DE)
(72) Erfinder: Förster, Ralf Dr., 12623 Berlin (DE); Klein, Karsten Dr., 14089 Berlin (DE); Laudien, Ulrich, 10555 Berlin (DE); Settegast, Silke, 10439 Berlin (DE); Sippel, Matthias, 36043 Fulda (DE); Subramanian, Ramesh Dr., 10777 Berlin (DE)

(57) **Zusammenfassung**

Die Erfindung betrifft eine dielektrische Flüssigkeit (5) für die funkenerosive Bearbeitung eines elektrisch nichtleitenden Materials (1), welche dadurch gekennzeichnet ist, dass sie eine wässrige Lösung oder eine wässrige Suspension mindestens eines kohlenstoffhaltigen Stoffes ist.

## Beschreibung

Die Erfindung betrifft eine dielektrische Flüssigkeit für die funkenerosive Bearbeitung eines elektrisch nichtleitenden Materials und ein Verfahren zur funkenerosiven Bearbeitung eines elektrisch nichtleitenden Materials.

Funkenerosive Bearbeitungsverfahren für elektrisch nichtleitende Materialien sind im Stand der Technik bekannt. Sie werden u. a. eingesetzt, um in Bauteilen, die mit einer keramischen Beschichtung versehen sind, Bohrungen zu erstellen. So werden etwa bei Turbinenschaufeln, die eine keramische Wärmedämmschicht auf einem metallischen Grundkörper aufweisen, Kühlluftbohrungen durch Funkenerosion erstellt.

In der DE 41 02 250 A1 ist allgemein ein Verfahren zur funkenerosiven Bearbeitung elektrisch nichtleitender Materialien beschrieben. Bei diesem Verfahren wird das nichtleitende Material vor seiner Bearbeitung mit einer elektrisch leitenden Substanz beschichtet. Diese Schicht wird als Assistenzelektrode verwendet, die bei der funkenerosiven Bearbeitung eine elektrische Kontaktierung zu einer Arbeitselektrode herstellt. Das mit der Assistenzelektrode beschichtete, elektrisch nichtleitende Material und zumindest der zur Assistenzelektrode weisende Endbereich der Arbeitselektrode, an dem es bei der Bearbeitung zur Funkenentladung kommt, sind in ein Dielektrikum getaucht, das durch eine Flüssigkeit wie Kerosin oder auch ein Gas gebildet wird.

Wenn an die Anordnung eine Spannung angelegt wird, kommt es zwischen der Arbeitselektrode und der Assistenzelektrode zu einer Funkenentladung und in der Folge zu einem Abtrag der Assistenzelektrode sowie des darunterliegenden elektrisch nichtleitenden Materials. Gleichzeitig wird ein Teil des Dielektrikums gecrackt, wodurch Kohlenstoff oder leitfähige Carbide entstehen, die in Form einer elektrisch leitfähigen Schicht auf den freigelegten Oberflächenbereichen des nichtleitenden Materials abgeschieden werden. Die so abgeschiedene, elektrisch leitende Schicht ersetzt somit das abgetragene Material der Assistenzelektrode und stellt bei einem Vordringen der Arbeitselektrode in das nichtleitende Material eine leitende Verbindung zu der Oberfläche des nichtleitenden Materials her, so dass eine kontinuierliche Bearbeitung möglich ist.

Als nachteilig wird angesehen, dass bei dem bekannten Verfahren die Bearbeitungsgeschwindigkeit begrenzt ist, da der Abscheidungsprozess der leitenden Schicht langsam erfolgt. Eine zügige Bearbeitung ist deshalb nicht möglich.

Die Abscheidungsgeschwindigkeit hängt maßgeblich von der Zusammensetzung der dielektrischen Flüssigkeit ab. Zurzeit werden im Allgemeinen die gleichen dielektrischen Flüssigkeiten für die funkenerosive Bearbeitung nichtleitender Materialien verwendet, die auch für Metalle eingesetzt werden. Dies sind beispielsweise Kerosin oder andere Kohlenwasserstoffe, die auch deshalb problematisch sind, weil sie gesundheitsschädlich und brennbar sind. Aus diesem Grund müssen besondere Vorsichtsmaßnahmen ergriffen werden, um die Entzündung der dielektrischen Flüssigkeit zu verhindern.

Aufgabe der vorliegenden Erfindung ist es, eine spezielle dielektrische Flüssigkeit für die funkenerosive Bearbeitung eines elektrisch nichtleitenden Materials bereitzustellen, die eine schnelle Ausbildung der elektrisch leitenden Schicht im Bereich der funkenerosiven Bearbeitung ermöglicht und so insgesamt zu einer Beschleunigung der Bearbeitung beiträgt.

Außerdem ist es Aufgabe der vorliegenden Erfindung, ein Verfahren zur funkenerosiven Bearbeitung von elektrisch nichtleitendem Materials zu entwickeln, bei dem eine erfindungsgemäße dielektrische Flüssigkeit verwendet wird.

Die Aufgabe wird dadurch gelöst, dass eine dielektrische Flüssigkeit bereitgestellt wird, die eine wässrige Lösung oder eine wässrige Suspension mindestens eines kohlenstoffhaltigen Stoffes ist.

Da der Hauptbestandteil der dielektrischen Flüssigkeit Wasser ist, besteht nicht die Gefahr, dass sie während der Bearbeitung in Brand gerät, wie dies bei den im Stand der Technik bekannten organischen Lösungsmitteln möglich ist. Außerdem ist vorteilhaft, dass Wasser einerseits günstig ist und andererseits, wiederum im Gegensatz zu den bekannten organischen Lösungsmitteln, gesundheitlich unbedenklich ist. Die gelösten oder suspendierten kohlenstoffhaltigen Stoffe sind besonders gut geeignet, direkt oder in einer bei der Funkenentladung entstehenden chemisch umgewandelten Form als elektrisch leitende Schicht abgeschieden zu werden. Deshalb wird die leitende Schicht schnell ausgebildet und kann auch die funkenerosive Bearbeitung entsprechend schnell voranschreiten.

Besonders geeignete kohlenstoffhaltige Stoffe sind organische Verbindungen, die sich in Wasser lösen, ohne dabei zu dissoziieren. Dies können beispielsweise Polyole wie Glycerin sein. Alternativ können aber auch in Wasser unlösliche Stoffe verwendet werden, die dann suspensiert werden.

Es hat sich außerdem herausgestellt, dass Mono-, Di- und Polysaccharide gute Ergebnisse liefern. So kann beispielsweise Glucose, Saccharose oder auch Stärke verwendet werden. All diese Verbindungen haben den Vorteil, dass sie kostengünstig, gesundheitlich unbedenklich und in großen Mengen verfügbar sind. Außerdem zählen sie zu den nachwachsenden Rohstoffen, was ihren Einsatz ebenfalls erstrebenswert macht.

Eine weitere Ausführungsform der Erfindung sieht den Einsatz von Graphit als kohlenstoffhaltigen Stoff vor, das direkt ohne eine weitere chemische Umwandlung während der funkenerosiven Bearbeitung als elektrisch leitende Schicht abgeschieden werden kann.

Die Bildung der elektrisch leitfähigen Schicht erfolgt besonders schnell, wenn zusätzlich Mikro- und/oder Nanopartikel elektrisch leitfähiger Stoffe in der dielektrischen Flüssigkeit enthalten sind. Diese Partikel können unmittelbar ohne eine weitere Umwandlung in der elektrisch leitfähigen Schicht eingebaut werden.

Um elektrisch nichtleitende Materialien zu bearbeiten, wird ein Verfahren bereitgestellt, bei dem das Material in eine dielektrische Flüssigkeit, wie sie zuvor erläutert wurde, getaucht wird.

Eine hohe Geschwindigkeit bei der funkenerosiven Bearbeitung kann erzielt werden, wenn erst während der Bearbeitung der dielektrischen Flüssigkeit Mikro- und/oder Nanopartikel elektrisch leitfähiger Stoffe zugeführt werden. Es ist besonders vorteilhaft, wenn die Partikel unmittelbar im Bearbeitungsbereich zugeführt werden, da sie dann direkt in die sich bildende leitende Schicht eingebaut werden können. Die Zuführung kann beispielsweise durch eine gebohrte Arbeitselektrode und/oder durch eine Öffnung in dem elektrisch nichtleitenden Material erfolgen.

Das erfindungsgemäße Verfahren eignet sich gut für Keramiken, die aus voll- oder teilstabilisiertem Zirkoniumoxid bestehen oder es enthalten. Derartige Werkstoffe werden häufig als Beschichtung für Bauteile eingesetzt, die hohen Temperaturen ausgesetzt werden. Dazu gehören auch Teile von Turbinen, insbesondere Lauf- und Leitschaufeln. Da der Öffnungsbereich der Kühlluftbohrungen in Form eines Diffusors ganz oder teilweise in der keramischen Beschichtung ausgebildet werden muss, bietet das Verfahren hier große Vorteile.

Das erfindungsgemäße Verfahren wird im Folgenden anhand von zwei Zeichnungen näher erläutert.

Es zeigen:
- Figur 1: eine Anordnung für die Durchführung des Verfahrens zur funkenerosiven Bearbeitung von elektrisch nicht leitenden Materialien gemäß der vorliegenden Erfindung in schematischer Darstellung vor dem Beginn der Bearbeitung,
- Figur 2: die Anordnung aus Figur 1 während der Bearbeitung,
- Figur 3: eine Gasturbine,
- Figur 4: eine Turbinenschaufel und
- Figur 5: eine Brennkammer.

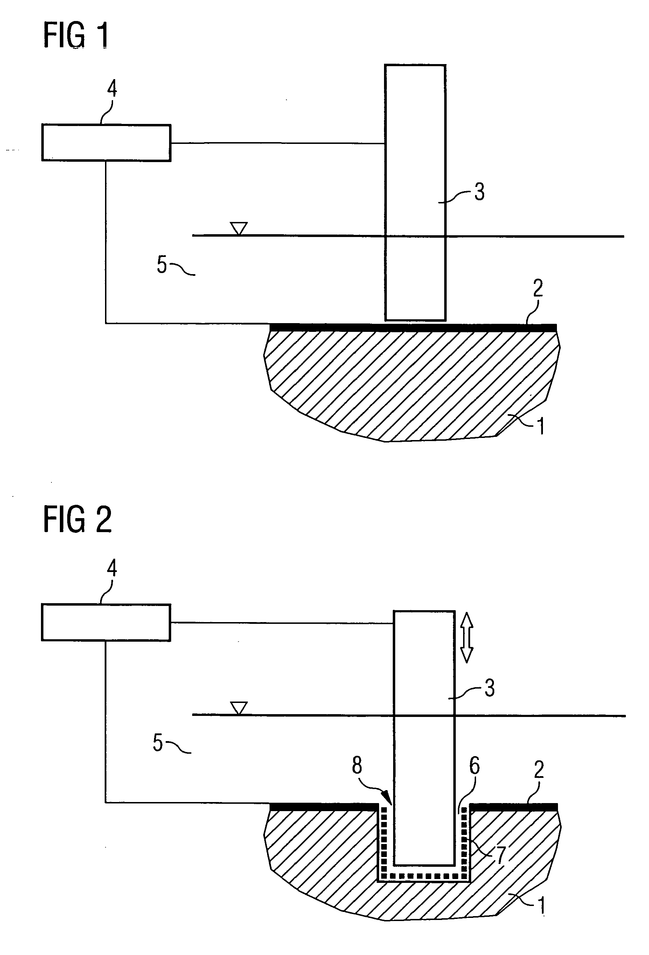

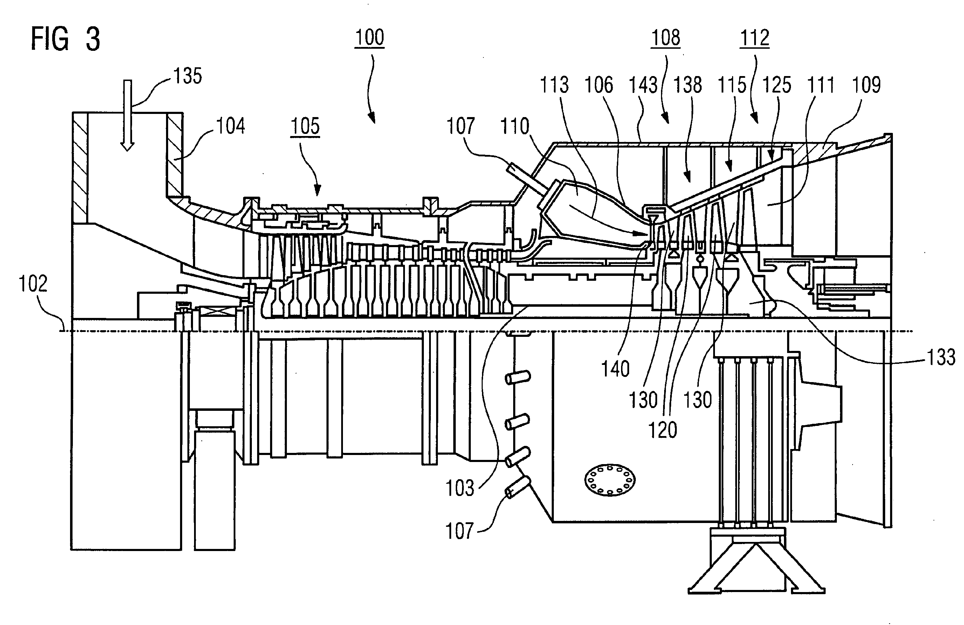

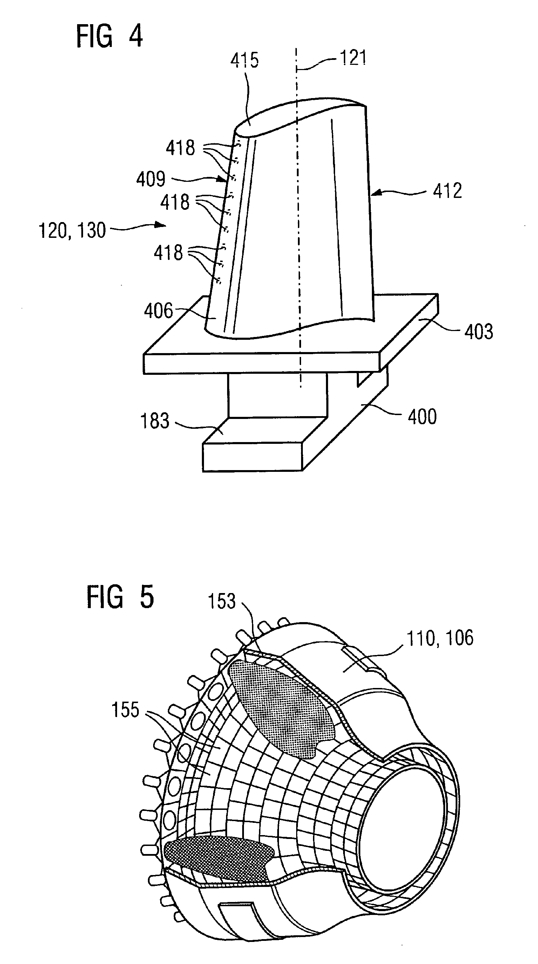

Die Figur 1 zeigt eine Anordnung für die Durchführung des erfindungsgemäßen Verfahrens zur funkenerosiven Bearbeitung von elektrisch nichtleitenden Materialien, hier in Form eines Bauteils 1, das aus einer Keramik besteht, die Zirkoniumoxid enthält. Das Bauteil 1 kann Teil einer Turbine 100 ( (Fig. 3) oder einer Brennkammer, z.B. eine Lauf- 120 (Fig. 3, 4) oder Leitschaufel 130 (Fig. 3, 4)sein. Es ist auch möglich, dass das elektrisch nichtleitende Material die Beschichtung beispielsweise einer Turbinenschaufel bildet, wobei sie als eine Wärmedämmschicht ausgeführt sein kann.

Auf dem Bauteil 1 ist flächig eine elektrisch leitende Substanz in Form einer Graphitschicht als Assistenzelektrode 2 aufgebracht. Alternativ kann als elektrisch leitende Substanz auch eine organische Verbindung oder ein Metall, wie beispielsweise Zirkonium verwendet werden.

Die Assistenzelektrode 2 und eine Arbeitselektrode 3 sind elektrisch leitend mit einem Generator 4 verbunden, der an den Elektroden 2, 3 eine geeignete Spannung anlegt. Die beiden Elektroden 2, 3 sind in eine dielektrische Flüssigkeit 5 getaucht. Diese enthält Wasser als Hauptbestandteil und zusätzlich Glucose als gelöstes Monosaccharid. Alternativ kann auch Graphit suspensiert werden oder Mischungen verschiedener kohlenstoffhaltiger Stoffe verwendet werden. Zusätzlich können auch Mikro- und/oder Nanopartikel elektrisch leitfähiger Stoffe in der Flüssigkeit 5 enthalten sein.

Um das Bauteil 1 mit Hilfe des erfindungsgemäßen funkenerosiven Verfahrens zu bearbeiten, wird in einem ersten Schritt die Graphitschicht als Assistenzelektrode 2 auf die zu bearbeitende Oberfläche des Bauteils 1 aufgebracht, die dann gemeinsam mit der Arbeitselektrode 3 elektrisch mit dem Generator 4 verbunden wird. Anschließend wird das Bauteil 1 sowie zumindest der untere Teil der Arbeitselektrode 3 in die dielektrische Flüssigkeit 5 getaucht. Nachdem die Arbeitselektrode 3 in unmittelbare Nähe zu der Graphitschicht 2 gebracht worden ist und eine geeignete Spannung an die beiden Elektroden 2, 3 angelegt wurde, kommt es zwischen den Elektroden 2, 3 zu einer elektrischen Kontaktierung in Form von Funkenschlag, wobei die Assistenzelektrode 2 und das keramische Material des Bauteils 1 in einem Bearbeitungsbereich 6 verdampft und damit abgetragen werden, um eine Öffnung 8 auszubilden. Durch die Funkenentladung wird gleichzeitig die in der dielektrischen Flüssigkeit 5 gelöste Glucose gecrackt, und die entstehenden Crackprodukte lagern sich in Form einer leitenden Schicht 7 auf dem Bauteil 1 ab, wobei sie die Assistenzelektrode ersetzt, so dass es bei einer Fortsetzung des Verfahrens zu einem Funkenschlag zwischen der abgeschiedenen Schicht 7 und der Arbeitselektrode kommt und in der Folge die abgeschiedene Schicht 7 sowie das keramische Material des Bauteils 1 weiter abgetragen werden, wobei die abgetragenen Bereiche der Schicht 7 kontinuierlich wieder durch die Crackprodukte aufgefüllt werden.

Es ist auch möglich während der Bearbeitung elektrisch leitenden Mikro- und/oder Nanopartikel durch eine nicht gezeigte gebohrte Arbeitselektrode 3 oder durch eine ebenfalls nicht gezeigte Öffnung in dem Bauteil 1 direkt in dem Bearbeitungsbereich 6 zuzuführen.

Die Figur 3 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1 EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die-äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrA1X-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf, die vorzugsweise mit dem erfindungsgemäßen Verfahren hergestellt werden.

Die Figur 5 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf, die vorzugsweise mit dem erfindungsgemäßen Verfahren hergestellt werden.

Jedes Hitzeschildelement 155 aus einer Legierung ist arbeitsmediumsseitig mit einer besonders hitzebeständigen Schutzschicht (McrAlx-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrA1X: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Dielektrische Flüssigkeit (5) für die funkenerosive Bearbeitung eines elektrisch nichtleitenden Materials (1),
**dadurch gekennzeichnet, dass**
sie eine wässrige Lösung oder eine wässrige Suspension mindestens eines kohlenstoffhaltigen Stoffes ist.

2. Dielektrische Flüssigkeit (5) nach Anspruch 1,
**dadurch gekennzeichnet, dass**
der kohlenstoffhaltige Stoff eine organische Verbindung ist.

3. Dielektrische Flüssigkeit (5) nach Anspruch 2,
**dadurch gekennzeichnet, dass**
die organische Verbindung ein Monosaccharid, Disaccharid oder ein Polysaccharid ist.

4. Dielektrische Flüssigkeit (5) nach Anspruch 1,
**dadurch gekennzeichnet, dass**
der kohlenstoffhaltige Stoff Graphit ist.

5. Dielektrische Flüssigkeit (5) nach einem der Ansprüche 1 bis 4,
**dadurch gekennzeichnet, dass**
sie zusätzlich Mikro- und/oder Nanopartikel elektrisch leitender Stoffe enthält.

6. Verfahren zur funkenerosiven Bearbeitung eines elektrisch nichtleitenden Materials (1),
**dadurch gekennzeichnet, dass**
das Material in eine dielektrische Flüssigkeit (5) nach einem der Ansprüche 1 bis 5 getaucht wird.

7. Verfahren nach Anspruch 6,
**dadurch gekennzeichnet, dass**
der dielektrischen Flüssigkeit (5) während der funkenerosiven Bearbeitung Mikro- und/oder Nanopartikel elektrisch leitender Stoffe zugeführt werden.

8. Verfahren nach Anspruch 7,
**dadurch gekennzeichnet, dass**
die Mikro- und/oder Nanopartikel durch eine gebohrte Arbeitselektrode (3) und/oder durch eine Öffnung in dem elektrisch nichtleitenden Material (1) zugeführt werden.

9. Verfahren nach einem der Ansprüche 6 bis 8,
**dadurch gekennzeichnet, dass**
das elektrisch nichtleitende Material (1) eine Keramik ist.

10. Verfahren nach Anspruch 9,
**dadurch gekennzeichnet, dass**
die Keramik voll- oder teilstabilisiertes Zirkoniumoxid enthält oder daraus besteht.

11. Verfahren nach einem der Ansprüche 6 bis 10,
**dadurch gekennzeichnet, dass**
das elektrisch nichtleitende Material (1) eine Beschichtung auf einem Bauteil ist.

12. Verfahren nach Anspruch 11,
**dadurch gekennzeichnet, dass**
das Bauteil Teil einer Turbine ist.

13. Verfahren nach Anspruch 12,
**dadurch gekennzeichnet, dass**
das Bauteil eine Lauf- oder Leitschaufel ist.
